# EUROPEAN PATENT APPLICATION

(11) **EP 1 704 827 A1**
(43) Date of publication of application: **27.09.2006**
(21) Application number: 05425167.3
(22) Date of filing: 23.03.2005
(51) Int. Cl.: A61C 5/00, A61C 13/003

(54) **Reinforcing strip for odontological applications**

(71) Applicant: Bioloren S.A.S. di Ratti Andrea Alessandro E C., 21047 Saronno (Varese) (IT)
(72) Inventor: Ratti, Umberto, 21047 Saronno (Varese) (IT)
(74) Representative: Tansini, Elio Fabrizio

(57) **Abstract**

It is disclosed a reinforcing strip for odontological applications consisting of a fabric obtained through interlacing of warp (2) and weft (3) threads (2) in which the warp threads (2) have a substantially rectilinear extension and are tauten with a mutually parallel orientation in the longitudinal extension direction of the strip itself and the weft (3) extends with an orientation substantially perpendicular to the warp threads.

## Description

The present invention relates to a reinforcing strip for odontological applications.

It is known that in many dental sectors reinforcing strips are used that consist of fabrics obtained from interlacing of weft and warp threads consisting of fibres of synthetic materials.

These reinforcing strips have been able in association with suitable resins, to advantageously replace other articles of manufacture made of steel or composite materials for example.

Among the main use destinations of said reinforcing strips the following can be mentioned: splinting operations, for stabilisation of a traumatised or uprooted tooth for example, construction of orthodontic-retention elements and spacer elements, reinforcement and/or repair of articles of manufacture such as provisional bridges made of acrylic resin or a composite material, provisional stabilisation of re-implanted teeth and construction of endodontic pins-stumps.

The reinforcing strips of known type used in the above mentioned odontological applications and also in other applications sometimes have limits reducing optimisation of their performance at least partly.

In fact, first of all, they are not generally characterised by a uniform resistance to mechanical tensile stresses in a longitudinal direction and in a transverse direction. In addition, the interlacing texture between the warp and weft threads does not avoid occurrence of both longitudinal and transverse elongation.

It is also to be pointed out that known reinforcing strips do not allow a net cutting operation without frayed parts and/or ladders. In addition, removal of the frayed parts may even require further cutting operations carried out with a diamond cutter.

Furthermore, the reinforcing strips constructed in accordance with the known art do not sometimes enable a full impregnation with some resins used in the odontological field and therefore an excellent adhesion to the parts with which they are designed to be engaged cannot be reached.

Under this situation, the technical task underlying the present invention is to conceive a reinforcing strip for odontological applications having a high and uniform resistance to mechanical tensile stresses in all directions, in particular in the longitudinal and transverse directions.

Another important aim of the invention is to conceive a reinforcing strip that does not fray or ladder during cutting.

A further aim of the invention is to conceive a reinforcing strip enabling full impregnation with most of the resinous composite materials, the adhesive materials devoid of fillers and the acrylic resin, so as to promote a steady and safe engagement with the parts with which said strip must be made integral.

The technical task mentioned and the aims specified are substantially achieved by a reinforcing strip for odontological applications which is characterised in that it comprises one or more of the technical solutions hereinafter claimed.

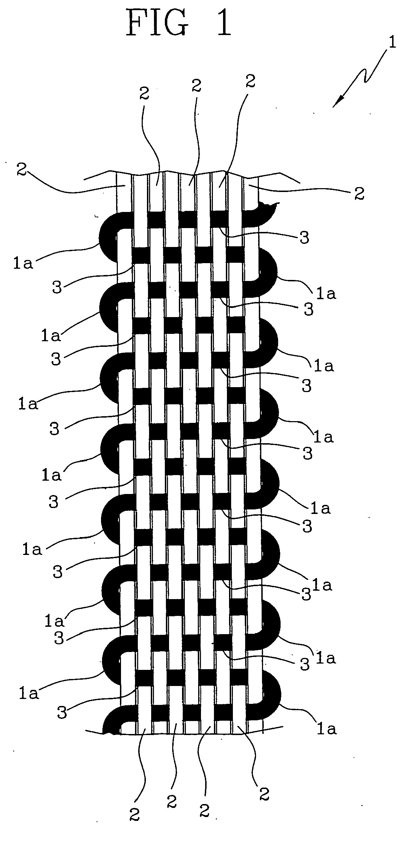

Description of a preferred but not exclusive embodiment of a reinforcing strip in accordance with the invention is taken hereinafter by way of non limiting example with reference to the accompanying drawings in which the only figure is a perspective view of a reinforcing strip in accordance with the invention.

With reference to said figure, the reinforcing strip for odontological applications is generally identified with reference numeral 1.

It consists of a fabric obtained through interlacing of warp 2 and weft 3 threads.

In an original manner, the warp threads 2 have a substantially rectilinear extension and are tauten with a mutually parallel orientation in the longitudinal extension direction of the strip 1.

In particular, the warp threads 2 are disposed tightly close to each other and are maintained as much as possible taut during weaving so as to obtain a reinforcing strip in which axial elongation, following application of forces in this direction, are exclusively due to elastic elongation of the material forming the warp threads 2 and not to variations in the geometry of said warp threads moving from a non-rectilinear to a rectilinear arrangement.

The fabric weft 3 extends with an orientation substantially perpendicular to the warp threads and is defined by a single thread arc-wise bent at the longitudinal edges 1a of the strip 1 itself.

Advantageously, the weft thread 3 has a higher diameter than the diameter of the warp threads 2. The latter are aligned in side by side relationship and disposed mutually close to each other so that, between two subsequent stretches of the weft thread, they form fabric spaces filled with closely compacted threads having a longitudinal orientation.

Preferably, the warp and weft threads consist of long, unidirectional, white and highly crystallised polyethylene fibres.

Finally, advantageously, the reinforcing strip 1 can be either impregnated with a resin by a dental surgeon shortly before its use or, alternatively, during the manufacturing step at the end of weaving, it can be pre-impregnated with a resin for odontological use which is adapted to give the strip a structural continuity with the resins used for obtaining adhesion of the strip to the teeth or to other parts with which association is provided.

The invention achieves important advantages.

In fact, first of all, the reinforcing strip in accordance with the invention has high mechanical-strength features both in a longitudinal and in a transverse direction because the warp threads that are tauten longitudinally of the weft thread divided into stretches substantially perpendicular to the warp threads themselves, define an inextensible structure capable of distributing the forces applied to the whole strip without any particular stress for the resin with which said strip is associable. For instance, the periodontal splinting and orthodontic-retention devices obtained with the reinforcing strip in accordance with the invention are characterised by a high strength that keeps unchanged in time without any alteration due to wear.

It is to be pointed out that the special textile structure of the reinforcing strip in accordance with the invention also enables an excellent handiness degree to be reached that allows said strip to be shaped and modelled in a precise manner in the region of the interproximal spaces and, due to the complete absence of spring return, i.e. shape memory, provides a solution to one of the main problems of the fixed-constriction apparatus made of metal material.

It will be also recognised that the single weft thread bent and incorporated into the fibres of the warp threads, which weft thread has a much higher diameter than said fibres, prevents fraying of the strip during cutting, so that intervention with a diamond cutter for fraying removal is avoided.

Finally, due to the particular type of warp of the reinforcing strip in accordance with the invention, not only a net cut is allowed, but it is also possible to obtain a full impregnation with most of the resinous composite materials, the adhesive materials devoid of fillers and the acrylic resin, and therefore it can be advantageously used in repair of manufactured articles made of the above materials.

## Claims

1. A reinforcing strip for odontological applications consisting of a fabric obtained through interlacing of warp (2) and weft (3) threads (3), **characterised in that** the warp threads (2) have a substantially rectilinear extension and are tauten with a mutually parallel orientation in the longitudinal extension direction of the strip itself and **in that** the weft (3) extends with an orientation substantially perpendicular to the warp threads.

2. A strip as claimed in claim 1, **characterised in that** the weft (3) is defined by a single thread arc-wise bent at the longitudinal edges (1a) of the strip itself.

3. A strip as claimed in claim 1, **characterised in that** the weft thread (3) has a larger diameter than the warp threads (2).

4. A strip as claimed in claim 1, **characterised in that** the warp threads (2) are disposed close to each other in side by side relationship.

5. A strip as claimed in claim 1, **characterised in that** it is either pre-impregnated during manufacture with a resin for odontological use or it is impregnated by the operator responsible for the work shortly before its use.

6. A strip as claimed in claim 1, **characterised in that** the warp threads (2) and weft thread (3) consist of unidirectional polyethylene fibres.

7. A kit for odontological applications comprising:
- at least one portion of reinforcing strip (1) for odontological applications in accordance with one or more of the preceding claims;
- preferably further portions of reinforcing strip of transverse sizes different from those of the preceding reinforcing strip;
- cutting means adapted to transversely cut said strips (1); and
- a handbook explaining the features of the reinforcing strip.
